Europäisches Patentamt

(19) European Patent Office

Office européen des brevets

(11) Numéro de publication: **0 186 217**
**B1**

(12) **FASCICULE DE BREVET EUROPEEN**

(45) Date de publication du fascicule du brevet:
01.03.89

(51) Int. Cl.⁴: **A 47 G 1/10**

(21) Numéro de dépôt: 85200705.3

(22) Date de dépôt: 06.05.85

(54) **Cadre.**

(30) Priorité: 28.12.84 BE 214277

(43) Date de publication de la demande:
02.07.86 Bulletin 86/27

(45) Mention de la délivrance du brevet:
01.03.89 Bulletin 89/9

(84) Etats contractants désignés:
AT CH DE FR GB IT LI LU NL SE

(56) Documents cités:
CA-A- 925 292
CH-A- 292 342
DE-C- 644 789
FR-A- 748 387
US-A- 3 851 415
US-A- 4 122 617
US-A- 4 349 974

(73) Titulaire: INVISIBLE FRAME S.P.R.L., Avenue du Gris
Moulin 52, B-1310 La Hulpe (BE)

(72) Inventeur: Drzemala, Jean Stanislas, Avenue du Gris
Moulin 52, B-1310 La Hulpe (BE)

(74) Mandataire: Thirion, Robert et al, Bureau GEVERS S.A.
rue de Livourne 7 bte 1, B-1050 Bruxelles (BE)

ACTORUM AG

## Description

La présente invention a pour objet un cadre constitué de profilés présentant chacun deux saillies longitudinales parallèles, dirigées vers l'intérieur du cadre et entre lesquelles sont disposés les objets à encadrer, et comprenant des moyens d'assemblage constitués, à chaque coin du cadre, d'une part, par un élément à deux branches dont l'angle est égal à l'angle interne du cadre formé par deux profilés à l'endroit de leur jonction et dont chacune des branches est destinée à coopérer par emboîtement avec l'un de ces deux profilés et, d'autre part, par des moyens agencés sur les branches de l'élément pour immobiliser chaque branche par rapport au profilé correspondant.

Les cadres, connus actuellement et réalisés à partir de profilés, sont généralement pourvus de moyens d'assemblage constitués par des équerres s'emboîtant dans des évidements correspondants prévus dans lesdits profilés, l'assemblage des cadres étant réalisé grâce à des vis de pression disposées dans des trous taraudés du profilé et qui prennent appui sur les équerres pour les immobiliser dans les évidements précités. Ces cadres connus, qui sont forcément préfabriqués pour présenter, au voisinage de chacune des extrémités des profilés qui les constituent, les ouvertures taraudées susdites, présentent l'inconvénient majeur d'avoir des dimensions bien précises, c'est-à-dire que ces cadres ne peuvent être utilisés que pour l'encadrement d'objets ayant ces dimensions précises. De plus, ces cadres présentent également l'inconvénient, qu'au cours de leur montage et surtout lorsqu'il s'agit de cadres ayant des dimensions importantes, qu'il est parfois difficile d'assembler le dernier profilé, qui présente deux équerres, aux profilés déjà assemblés et à l'intérieur desquels sont déjà disposés les objets à encadrer. En outre, les cadres ne peuvent être qu'en forme de quadrilatère à quatre angles droits.

On connaît également, suivant le brevet allemand n° 644 789, un cadre correspondant au préambule de la revendication 1 constitué de profilés assemblés, à leurs jonctions, par des équerres dans lesquelles s'emboîtent et sont fixés lesdits profilés. Cette façon de faire présente l'inconvénient d'obtenir un cadre dont les équerres sont apparentes.

La présente invention a pour but de remédier à ces inconvénients et de procurer notamment un cadre dont les profilés peuvent être ajustés exactement en fonction des dimensions des objets à encadrer et ce, quelles que soient ces dimensions, ce cadre, dont l'assemblage est nettement plus aisé que celui des cadres connus, offrant l'avantage de pouvoir être de n'importe quelle forme régulière ou irrégulière. L'invention permet également de procurer un cadre obtenu à l'aide de profilés dont les moyens d'assemblage sont invisibles.

A cet effet, suivant l'invention, le cadre comprend des moyens de suspension et chacune des branches de l'élément a une section en forme de U dont les ailes et l'âme sont agencées pour venir coiffer l'extrémité libre de la saillie d'un des deux profilés qui est tournée vers l'intérieur du cadre et qui est la plus proche de l'arrière de ce dernier, les moyens susdits prévus sur chaque branche pour l'immobiliser par rapport à la saillie correspondante étant agencés sur l'aile de cette branche qui est située le plus à l'arrière du cadre.

Suivant une forme de réalisation de l'invention, les profilés ont la même section et les éléments susdits à deux branches sont identiques.

Suivant un mode de réalisation avantageux de l'invention, les moyens de suspension précités sont constitués par au moins un organe présenté par chacun des éléments susdits à deux branches et fixe par rapport audit élément.

Suivant une forme de réalisation avantageuse de l'invention, les profilés sont réalisés en matériau synthétique, tel qu'une matière plastique, chaque profilé comprenant un profilé métallique rigide agencé pour épouser la forme de la saillie la plus proche de l'arrière du cadre et pour enserrer cette dernière afin d'éviter les déformations des profilés en matériau synthétique.

Suivant un mode de réalisation particulièrement avantageux de l'invention, le matériau synthétique utilisé est du polyméthylméthacrylate, connu notamment sous le nom déposé de «Plexiglas», le cadre comprenant avantageusement, entre les deux saillies de chaque profilé sur toute la longueur de ce dernier, un ruban de matière opaque dont la largeur correspond à l'espace compris entre les deux saillies, ce ruban étant destiné à masquer la tranche correspondante des objets à encadrer.

D'autres modes particuliers de l'invention apparaissent dans les revendications dépendantes 4, 6 à 10 et 12. L'invention est exposée ci-après plus en détail à l'aide de dessins annexés qui représentent, à titre d'exemples non limitatifs, des formes de réalisation particulières du cadre suivant l'invention.

La figure 1 est une vue en perspective, avec brisures partielles, montrant les éléments constitutifs du cadre et les objets à encadrer à l'état non assemblé.

Les figures 2 et 3 sont des vues analogues à la figure 1 et montrent les éléments du cadre et les objets à encadrer en cours d'assemblage.

La figure 4 est une vue partielle en perspective, et à plus grande échelle que celle des figures 1 à 3, montrant une forme de réalisation particulière de l'élément à deux branches, en métal coulé, cet élément étant associé à deux profilés pour former un des coins du cadre.

Les figures 5 à 8 sont des sections de divers profilés qui peuvent être utilisés pour réaliser le cadre suivant l'invention, ces figures montrant également, en section, une des branches de l'élément d'assemblage.

Les figures 9 à 11 sont des vues schématiques, en élévation, de cadres suivant l'invention.

La figure 12 est une coupe, à grande échelle, suivant la ligne XII–XII de la figure 11.

Dans les différentes figures, les mêmes notations de référence désignent des éléments identiques ou analogues.

Le cadre 1 représenté aux dessins est constitué de profilés 2, 2′ et comprend des moyens d'assemblage 3, réunissant ces profilés 2, 2′ à chaque endroit de jonction de ces derniers et à chaque coin du cadre, ainsi que des moyens de suspension 4.

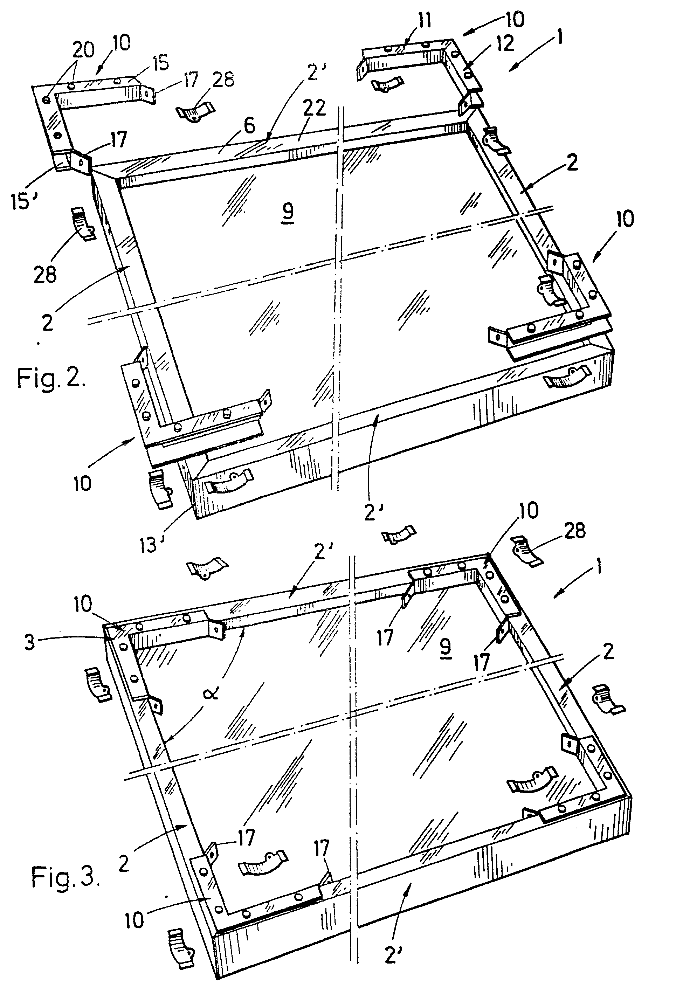

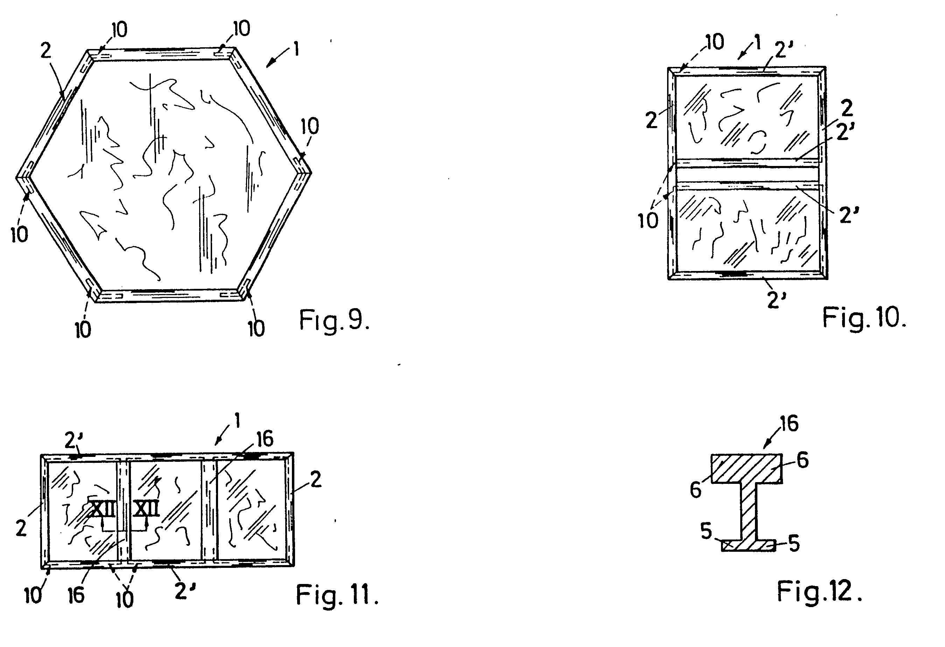

Les profilés 2, 2′ utilisés pour la réalisation du cadre 1 peuvent, contrairement aux cadres connus précités qui mettent en œuvre des équerres et qui sont essentiellement métalliques, être réalisés en n'importe quel matériau, tel que bois, métal, matière synthétique. Ces profilés 2, 2′, qui peuvent être de section extrêmement simple, présentent chacun deux saillies longitudinales 5 et 6 parallèles qui sont dirigées vers l'intérieur du cadre et entre lesquelles sont disposés les objets, tels que verre 7, œuvre 8, fond de cadre 9, à encadrer. Les moyens d'assemblage 3 du cadre sont constitués, à chaque coin du cadre, d'une part, par un élément 10, à deux branches 11 et 12 dont la section est en forme de U et dont l'angle 13 est égal à l'angle interne α du cadre (voir figures 3 et 9) formé par deux profilés 2 et 2′ à l'endroit de leur jonction 13′, chacune des branches 11 et 12 étant destinée à coopérer, par emboîtement, avec la saillie 6 d'un des deux profilés 2, 2′ la plus proche de l'arrière du cadre (voir figure 2) et d'autre part, par des moyens 14 agencés sur les branches 11 et 12 susdites pour immobiliser au moins une des ailes 15, 15′ de chaque branche 11, 12 par rapport à la saillie 6 correspondante des profilés 2, 2′.

Ce système d'assemblage des profilés 2 et 2′, à l'aide des éléments 10, permet, en cours de montage du cadre, de fermer parfaitement les joints existants entre lesdits profilés à l'endroit de leur jonction et de maintenir ces joints parfaitement et définitivement fermés lorsque le montage est terminé, ce qui n'est pas toujours le cas avec les systèmes existants.

Outre cet avantage important, les profilés 2 et les éléments 10 présentent l'avantage encore plus important, du fait que les moyens 14 assurant l'assemblage et l'immobilisation des profilés 2 et éléments 10 les uns par rapport aux autres sont agencés sur ces éléments 10, que les profilés 2 peuvent être utilisés tels quels sans y prévoir, à des distances déterminées, des moyens contribuant à leur assemblage. Il en résulte que pour réaliser les cadres, il suffit de sectionner les profilés aux dimensions voulues correspondant exactement aux dimensions de l'œuvre à encadrer, alors qu'avec les systèmes existants, utilisant des équerres, on était obligé de se cantonner dans l'utilisation de profilés préfabriqués et sectionnés à des dimensions standard.

Le cadre peut être, contrairement aux cadres existants qui sont toujours en forme de quadrilatère dont les angles sont droits, de n'importe quelle forme polygonale, convace ou convexe, régulière ou irrégulière. Ledit cadre peut également, notamment comme montré aux figures 10 et 11, présenter des traverses 16 et être utilisé pour constituer, par exemple, des panneaux dans lesquels les œuvres 8 sont juxtaposées ou non.

Les profilés 2 utilisés pour la réalisation de cadres 1, qui ne présentent pas les traverses 16 susdites, ont la même section et, lorsque ces cadres sont en forme de quadrilatères à angles droits (carré ou rectangle), les éléments 10 sont identiques, de même que lorsque les cadres sont en forme de polygones réguliers, tels que pentagone, hexagone, etc... Il suffit alors, pour réaliser des cadres de toutes les dimensions, de disposer de deux jeux d'éléments 10, un premier jeu d'éléments dont les branches 11 et 12 sont de longueur réduite pour les cadres de petit et moyen format et un second jeu dont la longueur des branches est plus importante pour les cadres de grand format. En ce qui concerne les traverses 16, celles-ci ont une section qui correspond à celle des profilés 2 et présentent, par rapport à un plan de symétrie passant par l'axe longitudinal de la traverse, deux paires de saillies longitudinales 5 et 6 opposées (voir figure 12).

Un autre avantage particulièrement important du cadre, par rapport aux cadres connus, réside dans le fait que les moyens de suspension 4 du cadre sont incorporés aux éléments 10 d'assemblage, ce qui permet non seulement de réduire le nombre de pièces nécessaires à la confection d'un cadre et les opérations de montage de ce dernier, mais également d'encadrer l'œuvre sans devoir nécessairement tenir compte du sens dans lequel elle sera suspendue.

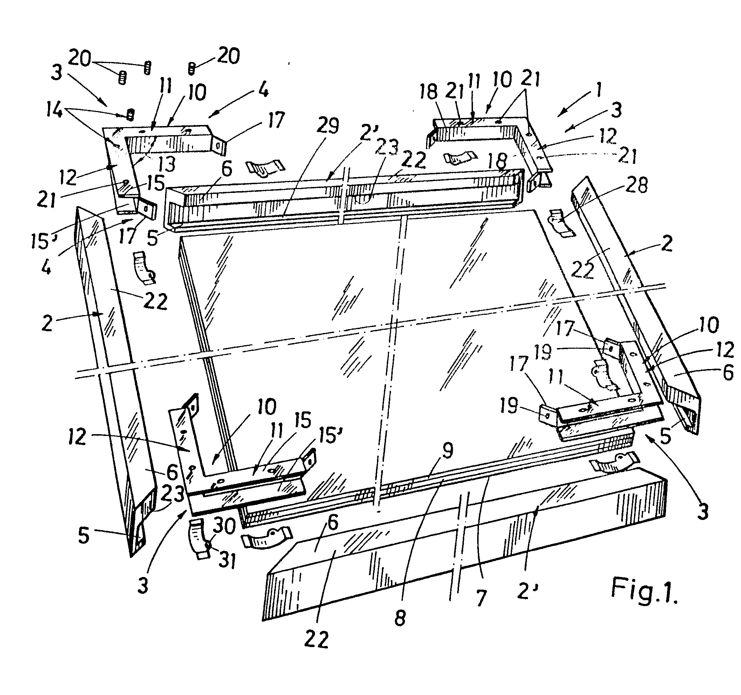

Dans la forme de réalisation illustrée aux figures 1 à 4, le cadre 1 est du type traditionnel en forme de quadrilatère à angles droits et est constitué de quatre sections de profilé, égales deux à deux, coupées en onglet aux dimensions exactes de l'œuvre à encadrer, les éléments 10 d'assemblage étant des équerres. Le montage du cadre peut s'effectuer de deux manières, à savoir soit, comme montré à la figure 2, en disposant tout d'abord les quatre profilés 2, 2′ autour des objets à encadrer tout en engageant ceux-ci entre les saillies 5 et 6 de chaque profilé et en fermant les joints aux quatre coins, puis en assemblant les profilés, coin par coin, à l'aide d'un élément d'assemblage 10, soit en disposant tout d'abord deux profilés consécutifs autour des objets à encadrer et en les assemblant à l'aide d'un élément 10 pour former un des coins du cadre, en posant le troisième profilé et en le fixant à l'un des deux profilés susdits à l'aide d'un autre élément 10 pour former le deuxième coin du cadre et enfin en posant le quatrième profilé et en le réunissant successivement à deux profilés déjà posés, par deux autres éléments 10, pour former les troisième et quatrième coins du cadre.

Comme montré, notamment aux figures 1 à 4, les moyens de suspension 4 susdits sont avantageusement constitués par une patte 17 située à l'extrémité libre de chacune des branches 11 et 12 de l'élément d'assemblage 10, cette patte étant formée par un prolongement de l'âme 18 du U constituant les branches et faisant un angle avec cette âme pour être orientée vers l'intérieur du cadre, chacune des pattes 17 présentant une ouverture 19 permettant d'y fixer l'extrémité d'un câble de suspension.

Les moyens 14 précités destinés à immobiliser les éléments 10 par rapport aux profilés 2, 2', pour réaliser l'assemblage du cadre, sont constitués, comme montré aux figures 1 à 4, par deux vis de pression 20 disposées dans deux trous taraudés 21, réalisés dans chacune des ailes 15 des branches 11 et 12 des éléments d'assemblage 10 et dont les axes sont perpendiculaires auxdites ailes 15. Les vis 20, du type vis pointeau à six pans creux, sont destinées à prendre appui sur les faces 22 des saillies 6 des profilés 2, 2' et lorsqu'elles sont serrées écartent les ailes 15 de ces faces 22 pour appliquer toute la surface des ailes 15' sur les faces 23 desdites saillies 6, ce qui assure un assemblage robuste au niveau de tous les coins du cadre tout en maintenant parfaitement fermés les joints des profilés 2, 2'.

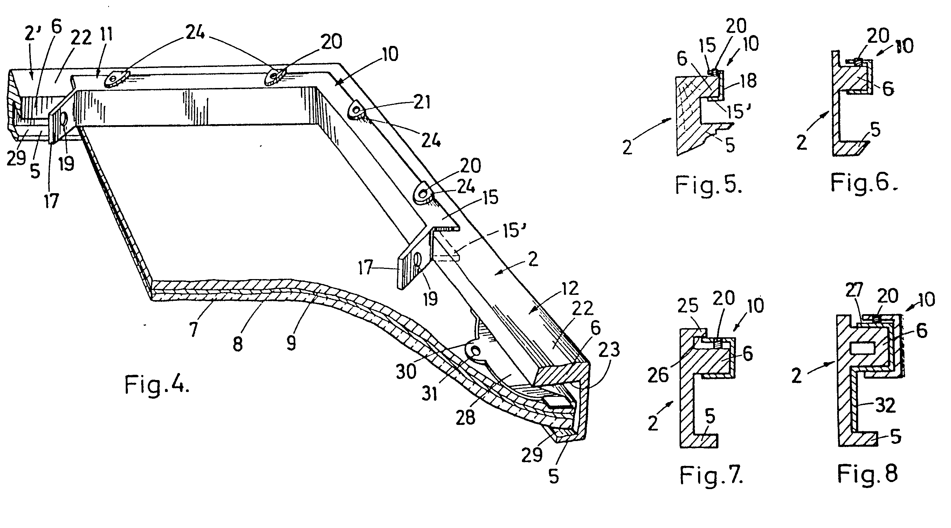

Pour renforcer les éléments 10, à l'endroit des trous taraudés 21, ceux-ci présentent avantageusement, comme montré à la figure 4, des renforcements 24. Dans le cas où ces éléments 10 sont réalisés en métal coulé, les pattes 17 et les renforcements 24 sont orientés, dans le même sens et parallèlement à la bissectrice de l'angle 13 formé par les branches 11 et 12 des éléments 10, pour pouvoir être fabriqués à l'aide de moules simples et faciliter le démoulage.

Pour éviter la déformation des éléments 10 lors du serrage des vis 20, les profilés 2 peuvent présenter, comme montré à la figure 7 et parallèlement à la saillie 6, une nervure 25 dirigée vers l'intérieur du cadre et située à l'opposé de la saillie 5. La distance qui sépare la saillie 6 de la nervure 25 est supérieure à l'épaisseur des ailes 15 des branches 11 et 12 des éléments 10 et est telle que, lorsque les vis 20 sont serrées et que les ailes 15' des branches 11 et 12 prennent appui sur les faces 23 des saillies 6, les ailes 15 prennent appui sur les faces 26 des nervures 25. La dimension des nervures 25, prise perpendiculairement à l'axe longitudinal des profilés, est telle que les vis 21 restent apparentes lorsque les ailes 15 des branches 11 et 12 sont engagées entre les saillies 5 et 6 et nervures 25.

Lorsque les profilés 2, 2' sont réalisés en matériau synthétique, tel qu'une matière plastique, chaque profilé comprend avantageusement un profilé métallique rigide 27, voir figure 8, épousant la forme de la saillie 6 et enserrant cette dernière afin de rigidifier les profilés, ces profilés 2, 2' et 27 étant en outre agencés pour que les vis de pression 20 des éléments 10 prennent appui sur les profilés métalliques 27.

Les objets 7, 8 et 9 à encadrer sont immobilisés entre les saillies 5 et 6 par des ressorts de pression 28 prenant appui sur les faces 23 des saillies 6 et sur le fond de cadre 9 pour appliquer le verre 7 sur les faces 29 des saillies 5, ces ressorts 28, constitués par une lame, présentant une excroissance 30, percée d'une ouverture 31, saillant des profilés lorsque les ressorts sont introduits entre les saillies 5 et 6 et destinée à faciliter la manipulation des ressorts tant pour les introduire entre les saillies susdites que pour les en extraire.

Les profilés 2, 2' du cadre 1 suivant l'invention sont avantageusement réalisés en polyméthylméthacrylate, connu sous le nom déposé «Plexiglas», ce qui le rend pratiquement invisible et laisse apparaître l'œuvre encadrée en transparence à travers les saillies 5 des profilés. Dans ce cas, on prévoit (comme montré à la figure 8), entre les saillies 5 et 6 de chaque profilé et sur toute la longueur de ce dernier, un ruban de matière opaque 32, dont la largeur correspond à l'espace compris entre ces saillies, les rubans 32 étant destinés à masquer, sur les faces latérales du cadre, les tranches des objets 7, 8, 9 à encadrer ainsi que les ressorts 28.

Le cadre 1 illustré à la figure 9 est un cadre hexagonal réalisé à l'aide de profilés identiques à ceux décrits ci-dessus, ces profilés étant assemblés à l'aide d'éléments 10 semblables à ceux qui ont été décrits ci-avant, l'angle formé par les branches 11 et 12 desdits éléments 10 étant de 120°.

Le cadre 1, illustré à la figure 10, est un cadre pour plusieurs œuvres 8 disposées à l'écart l'une de l'autre. Les profilés 2 et les éléments 10 de ce cadre sont identiques à ceux montrés aux figures 1 à 4 et leur assemblage s'effectue de la même manière. Dans le cadre 1, illustré à la figure 11, dans lequel plusieurs œuvres sont disposées côté à côté, les profilés 2, 2' et les éléments 10 étant identiques à ceux illustrés aux figures 1 à 4, tandis que les traverses 16, dont la section est montrée à la figure 12, présentent chacune deux paires de saillies 5 et 6 opposées, l'assemblage de ce dernier cadre étant réalisé d'une manière analogue à celle décrite ci-avant.

## Revendications

1. Cadre (1) constitué de profilés (2, 2') présentant chacun deux saillies longitudinales (5 et 6) parallèles, dirigées vers l'intérieur du cadre et entre lesquelles sont disposés les objets à encadrer, et comprenant des moyens d'assemblage (3) constitués, à chaque coin du cadre, d'une part, par un élément (10) à deux branches (11 et 12) dont l'angle (13) est égal à l'angle interne (α) du cadre formé par deux profilés (2 et 2') à l'endroit de leur jonction (13') et dont chacune des branches (11 et 12) est destinée à coopérer par emboîtement avec l'un de ces deux profilés (2, 2') et, d'autre part, par des moyens (14) agencés sur les branches (11 et 12) de l'élément (10) pour immobiliser chaque branche (11, 12) par rapport au profilé (2, 2') correspondant, ledit cadre étant caractérisé en ce qu'il comprend des moyens de suspension (4) et en ce que chacune des branches (11 et 12) de l'élément (10) a une section en forme de U dont les ailes (15 et 15') et l'âme (18) sont agencées pour venir coiffer l'extrémité libre de la saillie (6) d'un des deux profilés (2, 2') qui est tournée vers l'intérieur du cadre et qui est la plus proche de l'arrière de ce dernier, les moyens (14) susdits prévus sur chaque branche (11, 12) pour l'immobiliser par rapport à la saillie (6) correspondante étant agencés sur l'aile (15) de cette branche (11, 12) qui est située le plus à l'arrière du cadre.

2. Cadre (1) suivant la revendication 1, caractérisé en ce que les profilés (2, 2') ont la même section.

3. Cadre (1) suivant l'une ou l'autre des revendications 1 et 2, caractérisé en ce que les éléments (10) susdits à deux branches (11 et 12) sont identiques.

4. Cadre (1) suivant l'une ou l'autre des revendications 2 et 3, caractérisé en ce qu'il est constitué de quatre sections de profilé, égales deux à deux, dont les extrémités sont en onglet, les éléments (10) susdits à deux branches (11 et 12) étant en forme d'équerre.

5. Cadre (1) suivant l'une quelconque des revendications 1 à 4, caractérisé en ce que les moyens de suspension (4) précités sont constitués par au moins un organe présenté par chacun des éléments (10) susdits à deux branches et fixe par rapport audit élément.

6. Cadre (1) suivant la revendication 5, caractérisé en ce que chacun des éléments (10) à deux branches présente deux organes constituant les moyens de suspension (4) susdits, ces organes, en forme de patte (17), étant situés aux extrémités libres des branches (11 et 12) et étant constitués par un prolongement de l'âme de U faisant un angle avec cette dernière afin d'être orientés vers l'intérieur du cadre, chacune des pattes (17) présentant une ouverture (19) permettant d'y fixer l'extrémité d'un câble de suspension.

7. Cadre (1) suivant l'une quelconque des revendications 1 à 6, caractérisé en ce que les moyens (14) précités, agencés pour immobiliser au moins une des ailes (15, 15') de chaque branche (11, 12) des éléments susdits par rapport à la saillie (6) correspondante, sont constitués par au moins une vis de pression (20) disposée dans un trou taraudé (21), réalisé dans l'aile (15) la plus proche de l'arrière du cadre et d'axe sensiblement perpendiculaire à cette dernière, cette vis de pression (20) étant destinée à prendre appui sur la face (32) de la saillie (6) située en regard de l'aile considérée.

8. Cadre (1) suivant la revendication 7, caractérisé en ce que l'aile (15) susdite présente, à l'endroit du trou taraudé (21), une surépaisseur constituant un renforcement (24) de l'élément, cette surépaisseur étant prévue sur la face externe de l'aile.

9. Cadre (1) suivant la revendication 8, caractérisé en ce que les éléments (10) à deux branches précités sont réalisés en métal coulé, les pattes (17) précitées ainsi que les renforcements (24) de l'élément étant orientés, dans le même sens et parallèlement à la bissectrice de l'angle (13) formé par les deux branches.

10. Cadre (1) suivant l'une quelconque des revendications 1 à 9, caractérisé en ce que les profilés (2, 2') présentent, parallèlement à la saillie (6) la plus proche de l'arrière du cadre, une nervure (25) dirigée vers l'intérieur du cadre et située à l'opposé de l'autre saillie (5), la distance séparant la première saillie (6) susdite de la nervure (25) étant supérieure à l'épaisseur des ailes (15) des branches (11 et 12) des éléments (10) précités et telle que lorsqu'une aile (15) des branches (11 et 12) s'appuie sur la saillie (6), l'autre aile (15') des branches (11 et 12) s'appuie sur la nervure (25), tandis que la dimension de la nervure (25) prise perpendiculairement à l'axe longitudinal des profilés est telle que les moyens (14) susdits agencés pour immobiliser au moins une des ailes (15, 15') de chaque branche (11, 12) par rapport à la saillie (6) correspondante soient dégagés par rapport à cette nervure (25).

11. Cadre (1) suivant l'une quelconque des revendications 1 à 10, caractérisé en ce que les profilés (2, 2') sont réalisés en matériau synthétique, tel qu'une matière plastique, chaque profilé comprenant un profilé métallique rigide (27) agencé pour épouser la forme de la saillie (6) la plus proche de l'arrière du cadre et pour enserrer cette dernière afin d'éviter les déformations des profilés en matériau synthétique.

12. Cadre (1) suivant la revendication 11, caractérisé en ce que les profilés métalliques (27) et les éléments (10) à deux branches sont agencés pour que les vis de pression (20) précitées prennent appui sur lesdits profilés métalliques (27).

13. Cadre (1) suivant l'une ou l'autre des revendications 11 et 12, caractérisé en ce que le matériau synthétique utilisé est du polyméthylméthacrylate, connu notamment sous le nom déposé «Plexiglas».

14. Cadre (1) suivant la revendication 13, caractérisé en ce qu'il comprend, entre les deux saillies (5 et 6) de chaque profilé sur toute la longueur de ce dernier, un ruban de matière opaque (32) dont la largeur correspond à l'espace compris entre les deux saillies (5 et 6), ce ruban (32) étant destiné à masquer la tranche correspondante des objets à encadrer.

**Patentansprüche**

1. Rahmen (1), gebildet aus Profilen (2, 2'), die jedes zwei längsgerichtete parallele Vorsprünge (5 und 6), die zum Inneren des Rahmens gerichtet sind und zwischen denen die einzurahmenden Objekte angeordnet werden, und Verbindungsteile (3) aufweisen, die an jeder Ecke des Rahmens einerseits durch ein Element (10) mit zwei Armen (11 und 12), dessen Winkel (13) gleich dem Innenwinkel (α) des Rahmens ist, der von den beiden Profilen (2 und 2') an ihrer Verbindungsstelle (13') gebildet ist, wobei jeder Arm (11 und 12) dazu bestimmt ist, durch Einfügung mit einem der beiden Profile (2, 2') zusammenzuwirken, und andererseits durch Teile (14) gebildet sind, die auf den Armen (11 und 12) des Elementes (10) angeordnet sind, um jeden Arm (11, 12) in bezug auf das entsprechende Profil (2, 2') festzulegen, dadurch gekennzeichnet, dass der Rahmen eine Aufhängeinrichtung (4) aufweist und dass jeder der Arme (11 und 12) des Elementes (10) einen U-förmigen Querschnitt hat, dessen Schenkel (15 und 15') und Steg (18) so angeordnet sind, dass sie das freie Ende des Vorsprungs (6) eines der beiden Profile (2, 2') bedekken, das zum Inneren des Rahmens gewandt und seiner Rückseite am nächsten ist, und dass die Teile (14), die auf jedem Arm (11, 12) zu seinem Festlegen in bezug auf den korrespondierenden Vorsprung (6) vorgesehen sind, auf dem Schenkel (15) des Armes (11, 12) angeordnet sind, welcher der Rückseite des Rahmens am·nächsten liegt.

2. Rahmen nach Anspruch 1, dadurch gekennzeichnet, dass die Profile (2, 2') denselben Querschnitt haben.

3. Rahmen nach einem der Ansprüche 1 und 2, dadurch gekennzeichnet, dass die die beiden Arme (11, 12) aufweisenden Elemente (10) identisch sind.

4. Rahmen nach einem der Ansprüche 2 und 3, dadurch gekennzeichnet, dass er durch vier paarweise gleiche Profilabschnitte gebildet ist, deren Enden auf Gehrung geschnitten sind, und dass die Elemente (10) mit den beiden Armen (11 und 12) die Form eines Winkels haben.

5. Rahmen nach einem der Ansprüche 1 bis 4, dadurch gekennzeichnet, dass die Aufhängeinrichtung (4) von mindestens einem Organ gebildet ist, das jedes Element (10) mit zwei Armen aufweist und an diesem Element befestigt ist.

6. Rahmen nach Anspruch 5, dadurch gekennzeichnet, dass jedes der die beiden Arme aufweisenden Elemente (10) zwei Organe aufweist, welche die Aufhängeeinrichtung (4) bilden, dass diese Organe in Form einer Lasche (17) an den freien Enden der Arme (11 und 12) angeordnet und von einer Verlängerung des U-Steges gebildet sind, wobei sie mit dem U-Steg einen Winkel derart bilden, dass sie zum Inneren des Rahmens weisen, und dass jede der Laschen (17) eine Öffnung (19) aufweist, an welcher das Ende des Aufhängseils befestigbar ist.

7. Rahmen nach einem der Ansprüche 1 bis 6, dadurch gekennzeichnet, dass die Teile (14), die zum Festlegen mindestens eines der Schenkel (15, 15') eines jeden Arms (11, 12) der Elemente in bezug auf den entsprechenden Vorsprung (6) angeordnet sind, von mindestens einer Druckschraube (20) gebildet sind, die in einem Gewindeloch (21) des Schenkels (15) angeordnet ist, welcher der Rückseite des Rahmens am nächsten ist, wobei das Gewindeloch eine zu ihm im wesentlichen senkrechte Achse aufweist, und dass diese Druckschraube (20) an der Oberfläche (22) des Vorsprungs (6) Halt findet, der zum betreffenden Schenkel gerichtet ist.

8. Rahmen nach Anspruch 7, dadurch gekennzeichnet, dass der Schenkel (15) an der Stelle des Gewindelochs (21) eine Verdickung aufweist, die von einer Verstärkung (24) des Elementes gebildet ist, und dass diese Verdickung an der Aussenoberfläche des Schenkels vorgesehen ist.

9. Rahmen nach Anspruch 8, dadurch gekennzeichnet, dass die Elemente (10) mit zwei Armen in Metallguss hergestellt sind, und dass die Laschen (17) ebenso wie die Verstärkungen (24) des Elementes gleichsinnig und parallel zu der Halbierenden des Winkels (13) ausgerichtet sind, welcher von den beiden Armen gebildet ist.

10. Rahmen nach einem der Ansprüche 1 bis 9, dadurch gekennzeichnet, dass die Profile (2, 2') parallel zu dem Vorsprung (6), der der Rückseite des Rahmens am nächsten liegt, eine Rippe (25) aufweisen, die zum Inneren des Rahmens gerichtet ist und auf der vom anderen Vorsprung (5) abgewandten Seite liegt, dass der Abstand zwischen dem ersten Vorsprung (6) und der Rippe (25) grösser als die Dicke der Schenkel (15) der Arme (11 und 12) der Elemente (10), und so ist, dass wenn sich ein Schenkel (15) der Arme (11 und 12) auf dem Vorsprung (6) abstützt, sich auch der andere Schenkel (15') der Arme (11 und 12) auf der Rippe (25) abstützt, während die Abmessung der Rippe (25) senkrecht zur Längsachse der Profile so gestaltet ist, dass die Teile (15), die zum Festlegen wenigstens eines der Schenkel (15, 15') jedes Arms (11, 12) am entsprechenden Vorsprung (6) angeordnet sind, von dieser Rippe (25) frei liegen.

11. Rahmen nach irgendeinem der Ansprüche 1 bis 10, dadurch gekennzeichnet, dass die Profile (2, 2') aus einem synthetischen Material wie Kunststoff bestehen, und dass jedes Profil ein steifes Metallprofil (27) aufweist, das so angeordnet ist, dass es sich an die Form des Vorsprungs (6), welcher der Rückseite des Rahmens am nächsten liegt, anschmiegt und diesen Vorsprung umschliesst, um Beschädigungen der Profile aus Kunststoff zu vermeiden.

12. Rahmen nach Anspruch 11, dadurch gekennzeichnet, dass die Metallprofile (27) und die die beiden Arme aufweisenden Elemente (10) so angeordnet sind, dass die Druckschrauben (20) mit diesen Metallprofilen (27) in Eingriff stehen.

13. Rahmen nach einem der Ansprüche 11 und 12, dadurch gekennzeichnet, dass das synthetische Material Polymethylmethacrylat ist.

14. Rahmen nach Anspruch 13, dadurch gekennzeichnet, dass er zwischen den beiden Vorsprüngen (5 und 6) jedes Profils auf dessen ganzer Länge ein Band (32) aus undurchsichtigem Material enthält, dessen Breite dem Raum zwischen den beiden Vorsprüngen (5 und 6) entspricht, und dass dieses Band (32) dazu bestimmt ist, die jeweilige Schnittfläche des einzurahmenden Objekts abzudecken.

**Claims**

1. Frame (1) composed of profile sections (2, 2') each having two parallel longitudinal projections (5 and 6) directed towards the interior of the frame and between which are arranged the objects to be framed, and comprising assembly means (3) composed, at each corner of the frame, on the one hand, of an element (10) with two branches (11 and 12) the angle (13) of which is equal to the interior angle (α) of the frame made up of two profile sections (2 and 2') at their junction point (13') and each branch of which is intended to cooperate by interlocking with one of the two profile sections (2, 2') and, on the other hand, by means (14) arranged on the branches (11 and 12) of the element (10) to immobilise each branch (11, 12) with respect to the corresponding profile section (2, 2'), the said frame being characterised in that it comprises suspension means and in that each of the branches (11 and 12) of the element (10) has a U-shaped section, the limbs (15 and 15') and the centre part (18) of which are arranged so as to cover the free end of the projection (6) of one of the two profile sections (2, 2') which is turned towards the interior of the frame and which is nearest to the back of the latter, the aforesaid means (14) provided on each branch (11, 12) to immobilise it with respect to the corresponding projection (6) being arranged on the limb (15) of the branch (11, 12) which is situated nearest the back of the frame.

2. Frame (1) according to claim 1, characterised in that the profile sections (2, 2') have the same section.

3. Frame (1) according to one or other of claims 1 and 2, characterised in that the aforesaid double branched (11 and 12) elements (10) are identical.

4. Frame (1) according to one or other of claims 2 and 3, characterised in that it comprises four profile sections, in matched pairs, the ends of which are mitred, the aforesaid double branched (11 and 12) elements (10) being in the form of a square.

5. Frame (1) according to any one of claims 1 to 4, characterised in that the aforesaid suspension means are made up of at least one means presented by each of the aforesaid double branched elements (10) and fixed with respect to said element.

6. Frame (1) according to claim 5, characterised in that each of the double branched elements (10) has two means making up the aforesaid suspension means (4), these means, in the form of flaps (17), being situated at the free ends of the branches (11 and 12) and being made up of an extension of the centre part of the U forming an angle with the latter so as to be directed towards the interior of the frame, each of the flaps (17) having an opening (19) allowing the end of a suspension cable to be attached to it.

7. Frame (1) according to any one of claims 1 to 6, characterised in that the aforesaid means (14), arranged so as to immobilise at least one of the limbs (15, 15') of each branch (11, 12) of the aforesaid elements with respect to the corresponding projection (6), are made up of at least one pressure screw (20) placed in a tapped hole (21), made in the limb (15) that is nearest to the back of the frame and has an axis more or less perpendicular to the latter, this pressure screw (20) being intended to rest on the face of the projection (6) situated opposite the limb in question.

8. Frame (1) according to claim 7, characterised in that the aforesaid limb (15) presents, in the region of the tapped hole (21), an extra thickness constituting a reinforcement (24) of the element, this extra thickness being provided on the external face of the limb.

9. Frame (1) according to claim 8, characterised in that the aforesaid double branched elements (10) are made of cast metal, the aforesaid flaps (17) as well as the reinforcements (24) of the element being oriented in the same direction as and parallel to the line bisecting the angle (13) formed by the two branches.

10. Frame (1) according to any one of claims 1 to 9, characterised in that the profile sections (2, 2') present, parallel to the projection (6) nearest to the back of the frame, a rib (25) directed towards the interior of the frame and situated on the opposite side from the other projection (5), the distance separating the aforesaid first projection (6) from the rib (25) being greater than the width of the limbs (15) of the branches (11, 12) of the aforesaid elements (10) and such that when one limb (15) of the branches (11 and 12) rests on the projection (6), the other limb (15') of the branches (11 and 12) rests on the rib (25), while the size of the rib (25) taken perpendicularly to the longitudinal axis of the profile sections is such that the aforesaid means (14) arranged so as to immobilise at least one of the limbs (15, 15') of each branch (11, 12) with respect to the corresponding projection (6) will be free with respect to this rib (25).

11. Frame (1) according to any one of claims 1 to 10, characterised in that the profile sections (2, 2') are made of synthetic material such as a plastic material, each profile section comprising a rigid metal profile section (27) arranged so as to assume the shape of the projection (6) nearest to the back of the frame and to surround the latter so as to avoid deformation of the profile sections of synthetic material.

12. Frame (1) according to claim 11 characterised in that the metal profile sections (27) and the double branched elements (10) are arranged so that the aforesaid pressure screws (20) rest on said metal profile sections (27).

13. Frame (1) according to one or other of claims 11 and 12, characterised in that the synthetic material used is made of polymethylmethacrylate known more particularly under the registered name «Plexiglas».

14. Frame (1) according to claim 13, characterised in that it comprises, between the two projections (5 and 6) of each profile section across the whole length of the latter, a ribbon of opaque material (32) the width of which corresponds to the space between the two projections (5 and 6), this ribbon (32) being intended to conceal the corresponding section of the objects to be framed.

Fig.1.

EP 0 186 217 B1

1/4

9

Fig. 2.

Fig. 3.

Fig.4.

Fig.5.

Fig.6.

Fig.7.

Fig.8

EP 0 186 217 B1

Fig.9.

Fig.10.

Fig. 11.

Fig.12.